Europäisches Patentamt

(19) European Patent Office

Office européen des brevets

(11) Veröffentlichungsnummer: **0 183 264**

**A1**

# (12) EUROPÄISCHE PATENTANMELDUNG

(21) Anmeldenummer: 85115100.1

(22) Anmeldetag: 28.11.85

(51) Int. Cl.⁴: **A 47 B 3/06**
**F 16 B 12/14**

(30) Priorität: 29.11.84 DE 3443617

(43) Veröffentlichungstag der Anmeldung:
04.06.86 Patentblatt 86/23

(84) Benannte Vertragsstaaten:
AT BE CH FR GB IT LI LU NL SE

(71) Anmelder: Martin Stoll GmbH
Waldshuter Strasse 25
D-7890 Waldshut-Tiengen 2(DE)

(72) Erfinder: Stoll, Martin
Waldshuter Strasse 25
D-7890 Waldshut-Tiengen 2(DE)

(74) Vertreter: Hoeger, Stellrecht & Partner
Uhlandstrasse 14c
D-7000 Stuttgart 1(DE)

(54) Anreihbare Möbelelemente.

(57) Um bei anreihbaren Möbelelementen (10) mit einem
oder mehreren außenliegenden Gestellteilen (14), die den
entsprechenden Gestellteilen (14') eines angereihten Nachbarelementes (10') gegenüberliegen und die zur Aufnahme
von Verbindungselementen insgesamt mindestens zwei
Ausnehmungen (20, 22) aufweisen, die mit denen (20', 22')
eines Nachbarelementes fluchten, eine einfach herzustellende und ohne besondere Werkzeuge wieder lösbare sichere
Verriegelung zu ermöglichen, wird vorgeschlagen, die Richtungen, in denen die Ausnehmungen (20, 20'; 22, 22')
fluchten, nicht prallel zueinander anzuordnen und daß die
Verbindungselemente den Ausnehmungen angepaßte Bolzen oder Stifte (24, 26) umfassen, wobei eingesetzte Bolzen
oder Stifte gleichzeitig die fluchtenden Ausnehmungen von
gegenüberliegenden Gestellteilen (14, 14') zweier Nachbarelemente (10, 10') belegen.

Fig.1

## B E S C H R E I B U N G

### Anreihbare Möbelelemente

Die Erfindung betrifft anreihbare Möbelelemente mit einem oder mehreren außenliegenden Gestellteilen, die den entsprechenden Gestellteilen eines angereihten Nachbarelements gegenüberliegen und die zur Aufnahme von Verbindungselementen insgesamt mindestens zwei Ausnehmungen aufweisen, die mit denen des Nachbarelements fluchten.

Bekannt sind bisher Möbelelemente, die durch Schraubverbindungen miteinander verbindbar sind und bei denen zur Aufnahme der Schraubverbindungen parallel verlaufende Bohrungen vorgesehen sind.

Der Nachteil dieser Verbindungstechnik ist die relativ umständliche Handhabung der Verbindungselemente, die teilweise auch noch spezielles Werkzeug erfordert.

Aufgabe der Erfindung ist es, anreihbare Möbelelemente zu schaffen, die auf einfache Weise und ohne besondere Werkzeuge sicher miteinander verbunden und wieder gelöst
werden können.

Diese Aufgabe wird bei Möbelelementen der eingangs beschriebenen Art erfindungsgemäß dadurch gelöst, daß die
Richtungen, in denen die Ausnehmungen fluchten, nicht parallel zueinander angeordnet sind und daß die Verbindungselemente den Ausnehmungen angepaßte Bolzen oder Stifte
umfassen, wobei eingesetzte Bolzen oder Stifte gleichzeitig die fluchtenden Ausnehmungen von gegenüberliegenden
Gestellteilen zweier Nachbarelemente belegen.

Die angereihten Möbelelemente können durch ein einfaches
Einstecken der Bolzen oder Stifte in die fluchtenden Ausnehmungen von Nachbarelementen schnell und ohne besondere
Werkzeuge sicher miteinander verbunden werden, da die
nicht parallel eingesetzten Verbindungselemente eine Relativbewegung der Nachbarelemente zueinander in jeder Richtung verhindern.

Möbelelemente, die sich für diese Verbindungstechnik eignen, sind beispielsweise Stühle, Tische, Regale und
Schrankmöbel. Die Gestellteile, in denen die Ausnehmungen
zur Aufnahme von Verbindungselementen angebracht sind,
können sowohl aus Hohlprofilen wie auch aus massiven Teilen
gearbeitet sein.

Günstig ist es, die Verbindungselemente in einer Ebene
anzuordnen.

Zu einer besseren Verteilung der auftretenden Zug- und
Spannungskräfte  werden die Ausnehmungen zweckmäßigerweise so angeordnet, daß sie nicht parallel zu Normalen
von Anreihebenen fluchten.

Besonders vorteilhaft sind Ausführungsformen, bei denen
die Verbindungselemente im Paßsitz in den Ausnehmungen
einsetzbar sind, wodurch eine bessere Verteilung von
eventuell auftretenden Spannungs- und Zugkräften möglich
wird.

Bei besonders bevorzugten Ausführungsformen weisen die
Bolzen oder Stifte ein Griffteil auf, das an einem Ende
des jeweiligen Bolzens oder Stiftes angeformt ist. Dadurch
wird die Handhabbarkeit der Verbindungselemente weiter verbessert, was sich vor allem beim Wiedertrennen von miteinander verbundenen Nachbarelementen bemerkbar macht.

Vorteilhaft ist es, die Elemente so auszubilden, daß sie
in mehreren Richtungen anreihbar und verbindbar sind. Dadurch lassen sich beispielsweise aus kleineren Tischelementen größere Tischflächen aufbauen. Auch bei Stühlen oder
anderen Sitzmöbeln ergeben sich durch eine variable  Anreihbarkeit vielfältige Einsatzmöglichkeiten.

Insbesondere lassen sich die Ausnehmungen in den Gestellteilen für die Aufnahme der Verbindungselemente so anordnen,
daß bei an mehreren Seiten anreihbaren Möbelelementen universelle Kombinationsmöglichkeiten resultieren, d.h. daß beim
Anreihen zweier Nachbarelemente nicht auf eine spezielle
Orientierung der Elemente zueinander geachtet werden muß.

Diese und weitere Vorteile der Erfindung werden im weiteren anhand der Zeichnung noch näher erläutert. Es zeigen
im einzelnen:

Figur 1     eine teilweise aufgebrochene Teilansicht
            von zwei miteinander verbundenen, erfindungsgemäßen Möbelelememten
            und
Figur 2     eine Schnittansicht längs der Linie 2-2

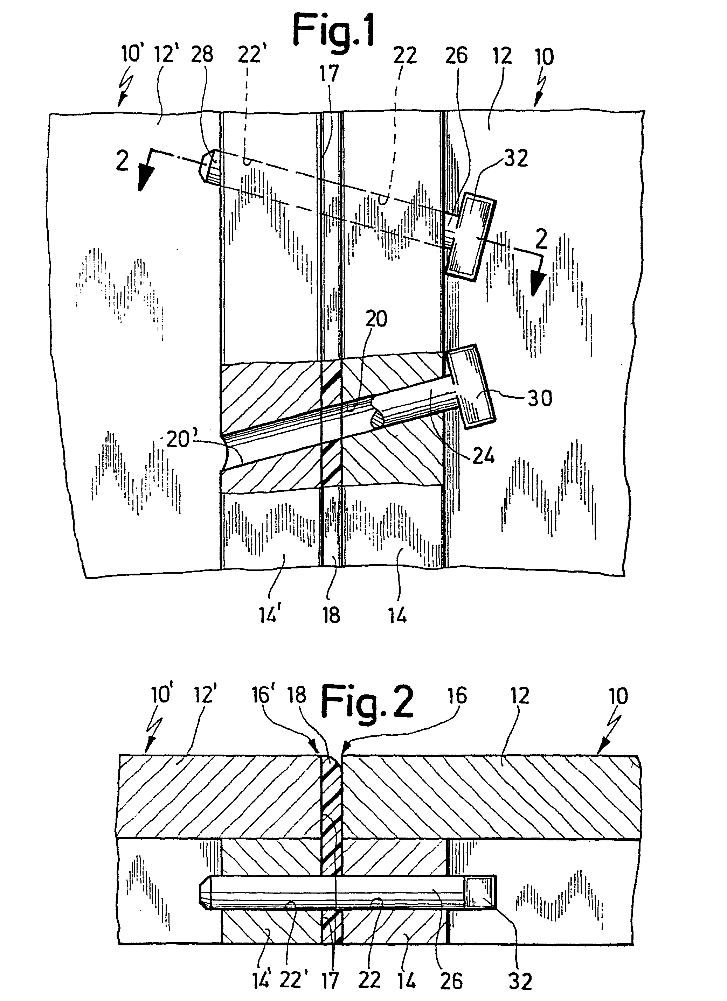

            in Figur 1.

Die Erfindung wird hier im einzelnen anhand von zwei
Tischelementen 10 und 10' beschrieben, deren Tischplatten
12 und 12' an der Unterseite ringsumlaufend Leisten 14
und 14' tragen, die bündig mit den Tischkanten 16 und 16'
abschließen. Das Tischelement 10' weist außerdem an den
Stirnseiten 17 der Tischplatte 12' und der Leiste 14' einen
Umleimer 18 auf.

Bei den Tischelementen 10 und 10' stellen die Leisten 14
bzw. 14' außenliegende Gestellteile dar, in denen fluchtende Ausnehmungen 20 und 20' bzw. 22 und 22' unter einem Winkel angeordnet sind. Die Ausnehmungen 20 und 20' bzw. 22 und
22' sind in diesem Ausführungsbeispiel durchgehende Bohrungen,
die die Leiste 14 und die Leiste 14' sowie den Umleimer 18
durchsetzen. Diese fluchtenden Ausnehmungen 20 und 20'

5

bzw. 22 und 22' nehmen    Verbindungselemente auf, die
hier als massive zylindrische Bolzen 24 und 26 ausgebildet sind. Die Bolzen 24 und 26 sind an ihrem vorderen Ende 28 angefaßt, so daß sie leichter in die Ausnehmungen
20 und 20' bzw. 22 und 22' einsetzbar sind. Am anderen Ende tragen die Bolzen 24 und 26 Griffelemente 30 bzw. 32,
die die Handhabung der Bolzen erleichtern und insbesondere
das Herausnehmen der Bolzen 24 und 26 beim Trennen der
Tischelemente 10 und 10' sehr vereinfachen.

Anstelle der hier verwendeten massiven Leisten 14 und 14'
können natürlich Hohlprofile verwendet werden, ohne daß
die Tischelemente ihre leichte und einfache Verbindbarkeit
einbüßen. Die Ausnehmungen, die hier im Querschnitt rund
abgebildet sind, können natürlich jeden anderen Querschnitt
haben; die Bolzen 24 und 26 sind dann entsprechend diesen
Querschnitten anzupassen, so daß sie einen festen Sitz in
den Gestellteilen haben. Eine besonders günstige Aufnahme
von Zug- und Biegekräften erhält man bei Bolzen 24 und 26,
die,wie im Ausführungsbeispiel in den Figuren 1 und 2 gezeigt, bezüglich den Ausnehmungen einen Paßsitz aufweisen,
da hier die Kräfte von den Bolzen nicht nur punktuell aufgenommen werden. Es versteht sich, daß neben massiven Bolzen auch rohrförmige Verbindungselemente verwendet werden
können. Ebenso versteht sich, daß die Ausnehmungen 20'
bzw. 22' als Sacklöcher ausgeführt sein können, die durch
den Umleimer 18 hindurch verlaufen, so daß sie zur Tischkante hin offen sind.

/

Patentansprüche

1. Anreihbare Möbelelemente mit einem oder mehreren außenliegenden Gestellteilen, die den entsprechenden Gestellteilen eines angereihten Nachbarelements gegenüberliegen und die zur Aufnahme von Verbindungselementen insgesamt mindestens zwei Ausnehmungen aufweisen, die mit denen eines Nachbarelementes fluchten,

d a d u r c h   g e k e n n z e i c h n e t ,

daß die Richtungen, in denen die Ausnehmungen (20 und 22 bzw. 20' und 22') fluchten, nicht parallel zueinander angeordnet sind  und daß die Verbindungselemente den Ausnehmungen (20 und 22 bzw. 20' und 22') angepaßte Bolzen oder Stifte (24, 26) umfassen, wobei eingesetzte Bolzen oder Stifte (24 , 26) gleichzeitig  . die fluchtenden Ausnehmungen (20 und 22 bzw. 20' und 22') von gegenüberliegenden Gestellteilen (14, 14') zweier Nachbarelemente (10, 10') belegen.

2. Möbelelemente nach Anspruch 1, dadurch gekennzeichnet, daß die Verbindungselemente (24, 26) in einer Ebene angeordnet sind.

2

3. Möbelelemente nach Anspruch 1 oder 2, dadurch gekennzeichnet, daß die Ausnehmungen (20, 20'; 22, 22')
nicht parallel zu Normalen von Anreihebenen fluchten.

4. Möbelelemente nach einem der Ansprüche 1 bis 3, dadurch gekennzeichnet, daß die Verbindungselemente
(24, 26) im Paßsitz in den Ausnehmungen (20 und 20'
bzw. 22 und 22') einsetzbar sind.

5. Möbelelemente nach einem der voranstehenden Ansprüche,
dadurch gekennzeichnet, daß die Bolzen oder Stifte
(24, 26) ein Griffteil (30, 32) umfassen, das an einem Ende des jeweiligen Bolzens oder Stiftes angeformt ist.

6. Möbelelemente nach einem der voranstehenden Ansprüche,
dadurch gekennzeichnet, daß die Elemente (10, 10')
in mehreren Richtungen anreihbar und verbindbar sind.

Fig.1

Fig.2

Martin Stoll GmbH , Waldshuter Str. 25 , 7890 Waldshut - Tiengen 2
HOEGER, STELLRECHT & PARTNER
Patentanwälte in Stuttgart

A 46 403 u

**0183264**
Nummer der Anmeldung

# EUROPÄISCHER RECHERCHENBERICHT

Europäisches
Patentamt

| EINSCHLÄGIGE DOKUMENTE | | | EP 85115100,1 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| X | DE - A1 - 2 514 357 (SHIMIZU...)<br>* Fig. 3; Fig. 7, Pos. 25 *<br>-- | 1-6 | A 47 B   3/06<br>F 16 B 12/14 | |
| A | GB - A - 2 137 488 (DANTVILLE...)<br>* Fig. 2, Pos. 12 *<br>---- | | | |

RECHERCHIERTE
SACHGEBIETE (int. Cl.4)

A 47 B   3/00
A 47 B   5/00
A 47 B   7/00
A 47 B  13/00
A 47 B  39/00
A 47 B  41/00
F 16 B  12/00

Der vorliegende Recherchenbericht wurde für alle Patentansprüche erstellt.

| Recherchenort | Abschlußdatum der Recherche | Prüfer |
|---|---|---|
| WIEN | 04-03-1986 | BENCZE |